# EUROPÄISCHE PATENTSCHRIFT

(11) **EP 2 251 649 B1**
(45) Veröffentlichungstag und Bekanntmachung des Hinweises auf die Patenterteilung: **26.02.2014**
(21) Anmeldenummer: 09006419.7
(22) Anmeldetag: 12.05.2009
(51) Int. Cl.: G01D 11/24

(54) **Verfahren zur Herstellung eines elektronischen Sensors**
Method for manufacturing an electric sensor
Procédé de fabrication d'un capteur électronique

(43) Veröffentlichungstag der Anmeldung: 17.11.2010
(73) Patentinhaber: Pepperl + Fuchs GmbH, 68307 Mannheim (DE)
(72) Erfinder: Lee, Yoke Wai, Singapore 3498111 (SG)
(74) Vertreter: Schiffer, Axel Martin

(56) Entgegenhaltungen:
- DE-A1- 10 207 777
- US-A1- 2009 058 585

## Beschreibung

Die vorliegende Erfindung betrifft ein Verfahren zur Herstellung eines elektronischen Sensors zum Nachweis einer physikalischen Messgröße nach dem Oberbegriff des Anspruchs 1.

Bei einem solchen, grundsätzlich bekannten Verfahren wird ein Sensorelement zum Messen der Messgröße und eine mit dem Sensorelement verbundene oder zu verbindende elektronische Baugruppe in eine Innenhülse eingebaut und die Innenhülse wird in einer Gehäusehülse montiert.

Bei den elektronischen Sensoren kann es sich grundsätzlich um jede Art von elektronischen Sensoren zum Nachweis von physikalischen Messgrößen handeln. Insbesondere kommen induktive und kapazitive Näherungsschalter, Temperatursensoren, Druck-, Feuchte- und/oder optische Sensoren in Betracht.

Solche Sensoren werden für eine Vielzahl von Anwendungen im industriellen Bereich, insbesondere in der Automatisierungstechnik, verwendet.

Elektronisch arbeitende Sensoren sind in der Regel so aufgebaut, dass mindestens eine elektronische oder elektromechanische Baugruppe in einem Gehäuse montiert ist. Das Gehäuse besteht dabei aus mehreren Teilen, um eine kostengünstige Montage zu ermöglichen. Das bedeutet jedoch, dass die Gehäuseteile während der Fertigung miteinander verbunden und die Gehäuseöffnungen nach der Montage verschlossen werden müssen. Dies stellt insbesondere dann eine Herausforderung dar, wenn die Sensoren in so genannten Feuchtapplikationen eingesetzt werden sollen, bei denen an die Dichtigkeit der Gehäusezusammenfügungen besonders hohe Ansprüche gestellt werden.

Bekannt ist in diesem Zusammenhang, die entsprechenden Gehäuseteile miteinander zu verkleben. Abgesehen von dem vor und nach dem eigentlichen Klebevorgang notwendigen Reinigungsschritten müssen dabei die zu verklebenden Flächen außerdem vorkonditioniert und beispielsweise mit einem Haftvermittler versehen werden. Häufig erhält man an den für die Dichtigkeit des Gehäuses insgesamt wichtigen Kontaktstellen gleichwohl nur eine unzureichende Verbindung.

Stand der Technik ist außerdem, die Gehäuseteile mit Hilfe einer Dichtung aus einem elastischen Material, beispielsweise mit Hilfe eines O-förmigen Dichtrings, an einer oder mehreren Kontaktstellen gegeneinander abzudichten. Hierbei können Schwierigkeiten beim Zusammenbau der Teile, die durch den mechanischen Druck der Dichtung auseinandergetrieben werden, entstehen. Es kann zum Abscheren, also zu Beschädigungen des Dichtrings und zu elastischen oder plastischen Verformungen der zu verbindenden Teile kommen. In diesem Zusammenhang können sich auch die auf den O-Ring ausgeübte Torsionsspannungen ungünstig auswirken. Weitere Schwierigkeiten bei der Verwendung von Dichtungen bestehen in der Einhaltung der notwendigen Toleranzen sowie im Zusammenhang mit den einzusetzenden Schmier- oder Gleitmitteln, die mittelfristig zu Degradationen des Dichtrings führen können.

Bekannt ist darüber hinaus auch, die verschiedenen Gehäuseteile durch Ultraschall-Schweißen miteinander zu verbinden. Hierbei entstehen zunächst aufgrund des jeweils speziell anzufertigenden Sonotrode-Halters signifikante Kosten. Darüber hinaus ist zu berücksichtigen, dass durch das Ultraschall-Schweißen nicht unerheblich mechanische Energie in den Sensor eingetragen wird, was sich sowohl auf die mechanischen als auch auf die elektronischen Komponenten ungünstig auswirken kann. Schließlich bestehen Schwierigkeiten, den Verfahrensschritt des Uitraschall-Schweißens stabil durchzuführen.

Eine weitere Möglichkeit, die gewünschte Dichtigkeit des Gehäuses und Unempfindlichkeit des Sensors auch für Feuchtapplikationen bereitzustellen, besteht darin, das Sensorgehäuse selbst nach der Montage mit einem aushärtenden Kunststoff, insbesondere mit einem geeigneten Harz zu verfüllen. Auch hier können sich jedoch mechanische Beanspruchungen, insbesondere beim Aushärten, nachteilig auf die mechanischen Teile und die Elektronik auswirken. Schwierigkeiten entstehen darüber hinaus durch Blasenbildung und Löcher in dem Gehäuse. Wegen des zum Teil schlechten Anhaftens des Vergussmaterials an den Gehäusewänden, löst sich das ausgehärtete Material schließlich häufig von den Wänden, wodurch Kriechkanäle entstehen, durch welche Wasser, andere Fluide und/oder Partikel eindringen können. Darüber hinaus sind die beim Vergießen notwendigen Reinigungsschritte im Allgemeinen aufwendig.

Aus US 2009/0058585 A1 ist ein elektronischer Sensor bekannt, der eine Gehäusehülle mit einer Innenhülse und ein Anschlussstück, das mit der Innenhülse zu verbinden ist, aufweist. Außerdem ist ein Sensorelement an einem Ende der Gehäusehülle angeordnet.

Ein weiteres Sensorgehäuse ist in DE 102 07 777 A1 beschrieben. Hierbei wird das Sensorgehäuse durch Laserschweißen mit einem Verschließelement flüssigkeits- und staubdicht verbunden.

Als eine **Aufgabe** der Erfindung kann angesehen werden, ein Verfahren zur Herstellung eines elektronischen Sensors anzugeben, welches einfach durchzuführen ist und mit welchem zuverlässig dichte Gehäuse hergestellt werden können.

Diese Aufgabe wird durch das Verfahren mit den Merkmalen des Anspruchs 1 gelöst.

Das Verfahren der oben genannten Art ist erfindungsgemäß dadurch weitergebildet, dass die Innenhülse aus einem ersten Kunststoffmaterial gebildet ist und mit einem Anschlussstück, welches aus einem zweiten Kunststoffmaterial gebildet ist, zum Herstellen eines Gehäuserohlings durch Laserschweißen an mindestens einer Kontaktstelle fluiddicht verbunden wird, wobei das erste Kunststoffmaterial und das zweite Kunststoffmaterial bei den Wellenlängen der zum Laserschweißen eingesetzten Laserstrahlung unterschiedliche Transmissionseigenschaften aufweisen, und dass der Gehäuserohling in die Gehäusehülse eingeklebt wird.

Bevorzugte und vorteilhafte Varianten des erfindungsgemäßen Verfahrens sind Gegenstand der abhängigen Ansprüche und werden außerdem in der nachfolgenden Beschreibung, insbesondere im Zusammenhang mit den Figuren, beschrieben.

Als ein Kerngedanke der Erfindung kann erachtet werden, das Gehäuse mit Hilfe einer Kombination einerseits einer Laserschweißverbindung der entsprechenden Teile der Innenhülse und andererseits eines Einklebens in die Gehäusehülse, herzustellen. Bei aufwendigen Tests, die schließlich zur Erfindung geführt haben, hat sich überraschend herausgestellt, dass gerade diese Kombination besonders zuverlässig in der Serienfertigung dichte Kontaktstellen und Gehäuse ermöglicht. Weiterhin hat sich gezeigt, dass insbesondere zwischen den Kunststoffteilen besonders gut versiegelte, das heißt dichte, Verbindungen, insbesondere auch zwischen unterschiedlichen Materialien bereitgestellt werden können.

Diese positiven Eigenschaften können insbesondere erreicht werden, ohne dass das Gehäuse mit einem Verguss versehen werden muss.

Als besonderer Vorteil der mit dem erfindungsgemäßen Verfahren hergestellten Sensoren ist demgemäß die besonders zuverlässige Dichtigkeit der Gehäuse anzusehen. Die mit dem erfindungsgemäßen Verfahren hergestellten Sensoren weisen demgemäß einen hohen IP-Schutz auf, sind also gegen das Eindringen von Feuchtigkeit und Staub besonders gut geschützt und können insbesondere als PCII-Sensoren, also gemäß "Schutzklasse II" gebildet sein.

Die mit dem erfindungsgemäßen Verfahren hergestellten Sensoren eignen sich deshalb besonders für Feuchtapplikationen und allgemein Anwendungen, bei denen mit einem hohen Eintrag an Feuchtigkeit, Staub und/oder anderen Partikeln gerechnet werden muss.

Darüber hinaus ergeben sich aber auch bedeutsame Vorteile im Hinblick auf das Herstellungsverfahren selbst. Im Vergleich zu den vorstehend beschriebenen Techniken werden bei dem erfindungsgemäßen Verfahren keine zusätzlichen Materialien benötigt, so dass insgesamt auch weniger Materialeigenschaften beim Design zu berücksichtigen sind. Weiterhin ist wesentlich weniger Reinigungsaufwand erforderlich. Beim Laserschweißen und beim anschließenden Einkleben des Gehäuserohlings in die Gehäusehülse entsteht praktisch keine mechanische Belastung auf die mechanischen Teile und die Elektronik. Da insgesamt weniger Teile miteinander zu verbinden sind, ist das Design insgesamt einfacher. Schließlich sind insgesamt weniger abzudichtende Übergänge vorhanden, die außerdem durch das erfindungsgemäße Verfahren besonders dicht versiegelt oder verschlossen werden können.

Die Gehäusehülse selbst kann grundsätzlich ebenfalls aus Kunststoff gefertigt sein. Bei bevorzugten Varianten des erfindungsgemäßen Verfahrens werden aber zylindrische Hülsen aus Metall verwendet, bei denen auf der Außenseite ein Gewinde, beispielsweise ein M12- oder M18-Gewinde, gebildet sein kann. Auch Gehäusehülsen ohne Außengewinde können jedoch vorteilhaft und zweckmäßig sein, beispielsweise wenn die Sensoren bei Applikationen mit hohen Hygieneanforderungen, wo kleine Krümmungsradien unerwünscht sind, eingesetzt werden.

Im Hinblick auf die erfindungsgemäß unterschiedlichen Transmissionseigenschaften des ersten Kunststoffmaterials und des zweiten Kunststoffmaterials kommt es darauf an, dass eines der beiden Materialien die zum Laserschweißen verwendete Strahlung und damit die zum Aufschmelzen des Kunststoffs nötige Energie absorbiert.

Das jeweils andere Material weist erfindungsgemäß dann im Hinblick auf die Transmission der zum Schweißen verwendeten Laserstrahlung andere Eigenschaften auf und ist insbesondere für Strahlung der verwendeten Wellenlängen weitgehend transparent.

Besonders bevorzugt werden die zu verbindenden Teile vor dem Laserschweißen ineinander gesteckt, wobei dasjenige Teil, welches die Strahlungsenergie absorbiert, innenliegend positioniert wird. Die Energie wird dann im Bereich der Kontaktstelle deponiert und die gewünschte Schweißverbindung kann bestmöglich realisiert werden.

Die gewünschten Anforderungen an die Dichtigkeit können besonders gut verwirklicht werden bei einer besonders bevorzugten Verfahrensvariante, bei der die Gehäusehülse den Gehäuserohling an der Kontaktstelle oder gegebenenfalls an den mehreren Kontaktstellen vollständig überlappt. Die Klebeverbindung, insbesondere im Bereich der Überlappungen, dient hierbei in Kombination mit der Laserschweißverbindung zur Erhöhung der Dichtigkeit.

Besonders vorteilhaft sind darüber hinaus Ausgestaltungen der Innenhülse, bei denen die Innenhülse an einem Messende, also einem Ende oder einem Bereich, in welchem das Sensorelement, beispielsweise eine Induktionsspule eines induktiven Näherungsschalters, angeordnet ist, vollständig geschlossen ist. Die Dichtigkeit des Gehäuserohlings wird dann im Bereich des Messendes auf einfache und natürliche Art realisiert. Es ist kein weiterer abzudichtender Kontaktbereich vorhanden und der Fertigungsaufwand kann insgesamt gesenkt werden.

Aus fertigungstechnischen Gründen kann aber auch zweckmäßig oder erforderlich sein, dass die Innenhülse an einem Messende offen ist. Hierdurch besteht größere Freiheit beim Zusammenbau des Sensors. Auch bei dieser Verfahrensvariante können die erfindungsgemäßen Vorteile realisiert werden, wenn die Innenhülse im Bereich des Messendes mit einer Endkappe durch Laserschweißen an mindestens einer weiteren Kontaktstelle verbunden wird, wobei die Endkappe aus einem dritten Kunststoffmaterial gebildet ist und wobei das erste Kunststoffmaterial und das dritte Kunststoffmaterial bei den Wellenlängen der zum Laserschweißen eingesetzten Laserstrahlung, wie oben beschrieben, unterschiedliche Transmissionseigenschaften aufweisen.

Prinzipiell kann der Gehäuserohling auch aus mehr als zwei oder drei Teilen bestehen, die durch Laserschweißen miteinander verbunden werden. Wichtig ist, dass die zu verbindenden Materialien an den jeweiligen Kontaktstellen die oben beschriebenen unterschiedlichen optischen Eigenschaften aufweisen und in diesem Sinn optisch komplementäre Materialien sind.

Besonders bevorzugt weisen die verwendeten Kunststoffmaterialien die gewünschten optischen Eigenschaften bereits aus sich heraus auf. Die erforderlichen Eigenschaften können jedoch gezielt variiert und beeinflusst werden. Beispielsweise können in das erste Kunststoffmaterial und/oder in das zweite Kunststoffmaterial und/oder in das dritte Kunststoffmaterial zumindest im Bereich der Kontaktstelle zwischen dem Anschlussstück und der Innenhülse und/oder im Bereich der weiteren Kontaktstelle zwischen der Innenhülse und der Endkappe Pigmente eingebettet sein, mit welchen die gewünschten optischen Eigenschaften des ersten Kunststoffmaterials, des zweiten Kunststoffmaterials und/oder des dritten Kunststoffmaterials bei dem zum Laserschweißen eingesetzten Wellenlängen der Laserstrahlung eingestellt werden.

Alternativ oder ergänzend können das erste Kunststoffmaterial und/oder das zweite Kunststoffmaterial und/oder das dritte Kunststoffmaterial zumindest im Bereich der Kontaktstelle zwischen dem Anschlussstück und der Innenhülse und/oder im Bereich der weiteren Kontaktstelle zwischen der Innenhülse und der Endkappe mit Beschichtungen versehen sein, durch welche die gewünschten optischen Eigenschaften eingestellt werden.

Die zur Verfügung stehende Laserenergie kann dann besonders gut genutzt werden und es können beispielsweise Werkstoffe eingesetzt werden, die für den sichtbaren Spektralbereich durchlässig sind, jedoch im infraroten oder ultravioletten absorbieren und so die Energie, gegebenenfalls unterstützt durch die Pigmente und/oder geeignete Beschichtungen, in Schmelzwärme umwandeln. Prinzipiell ist jede Kombination von transparenten und nicht transparenten Materialien durch Tausch der jeweils relevanten Kontaktstellen möglich.

Um eine mechanische Vorfixierung zu erreichen und so das Herstellen einer definierten Schweißverbindung zu erleichtern, werden bevorzugt die Innenhülse und das Anschlussstück schlussstück oder die Innenhülse und die Endkappe vor dem Laserschweißen ineinander gesteckt.

Die genannte mechanische Vorfixierung wird besonders einfach und zuverlässig dadurch erreicht, dass die Innenhülse und/oder das Anschlussstück und/oder die Endkappe zum reibschlüssigen Fixieren im Bereich der Kontaktstelle und/oder im Bereich der weiteren Kontaktstelle einen sich verjüngenden oder konisch geformten Bund aufweisen.

Ergänzend kann zum Bereitstellen der mechanischen Vorfixierung auch vorgesehen und die entsprechenden Komponenten können so geformt sein, dass das Anschlussstück mit der Innenhülse vor dem Laserschweißen im Bereich der Kontaktstelle verrastet wird und/oder dass die Innenhülse und die Endkappe vor dem Laserschweißen im Bereich der weiteren Kontaktstelle miteinander verrastet werden.

Um an einem Anschlussende, an welchem sich das Anschlussstück befindet, eine optische Signalisierung für einen Benutzer zu ermöglichen, wird das Anschlussstück bevorzugt aus einem für das menschliche Auge transparenten Kunststoffmaterial gebildet. Im Inneren des Sensorgehäuses an geeigneter Stelle positionierte Leuchtdioden können dann optische Signale, insbesondere zu Schaltzuständen des Sensors, nach außen geben.

Das Anschlussstück kann dabei als Kabel- oder als Steckerabgang gebildet sein. Beispielsweise können zur Herstellung des Anschlussstücks Kontaktstifte eines Steckerabgangs oder ein Anschlusskabel, gegebenenfalls mit einem Biegeschutz, mit dem Kunststoffmaterial umspritzt werden.

Mit Hilfe des erfindungsgemäßen Verfahrens können bei der vorstehend beschriebenen Wahl der Kunststoffmaterialien, beispielsweise für das menschliche Auge transparente Teile, zum Beispiel das Anschlussstück, auf Höhe einer Schaltzustandsanzeige verschweißt werden. In einem umgekehrten Fall, bei welchem die fraglichen Teile des Gehäuserohlings für das menschliche Auge undurchsichtig, für die zum Schweißen verwendete Laserstrahlung jedoch durchlässig sind, können mit dem Laser im Innern des Gehäuses Schweißnähte erzeugt werden, die insbesondere außerhalb eines transparenten Anschlussstücks, also nicht im Bereich der Höhe der Schaltzustandsanzeige liegen.

Besonders bevorzugt werden die Teile der Innenhülse so gestaltet, dass durch den Gehäuserohling ein fluiddichter Raum gebildet wird, in welchem die elektronische Baugruppe und das Sensorelement aufgenommen sind. Der so gebildete Sensor eignet sich dann besonders gut für Feuchtapplikationen.

Bei einer einfachen Verfahrensvariante wird eine Laserschweißnaht zwischen der Innenhülse und dem Anschlussstück und/oder zwischen der Innenhülse und der Endkappe mit einem feststehenden Laser durch gemeinsames Drehen der Innenhülse, des Anschlussstücks beziehungsweise der Endkappe relativ zu einem ortfesten Laserstrahl hergestellt. Dies wird auch als radiales Laserschweißen bezeichnet.

Prinzipiell sind auch breite oder bandförmige Laserschweißnähte möglich. Hierzu kann der zum Schweißen verwendete Laser um einen bestimmten Winkelhub oszillierend verschwenkt werden, wobei gleichzeitig die zu verschweißenden Komponenten relativ zu dem Laser gedreht werden.

Weitere Vorteile und Eigenschaften der vorliegenden Erfindung werden nachstehend mit Bezug auf die beigefügten schematischen Figuren erläutert. Hierin zeigt:
- Fig. 1: ein erstes Ausführungsbeispiel eines mit dem erfindungsgemäßen Verfahren hergestellten Gehäuserohlings;
- Fig. 2: ein zweites Ausführungsbeispiel eines mit dem erfindungsgemäßen Verfahren hergestellten Gehäuserohlings;
- Fig. 3 und Fig. 4: Varianten eines mit dem erfindungsgemäßen Verfahren ausgehend von dem in Fig. 1 gezeigten Gehäuserohling hergestellten elektronischen Sensors;
- Fig. 5 und Fig. 6: Varianten eines mit dem erfindungsgemäßen Verfahren ausgehend von dem in Fig. 2 gezeigten Gehäuserohling hergestellten elektronischen Sensors; und
- Fig. 7: ein fünftes Ausführungsbeispiel eines mit dem erfindungsgemäßen Verfahren hergestellten Gehäuserohlings.

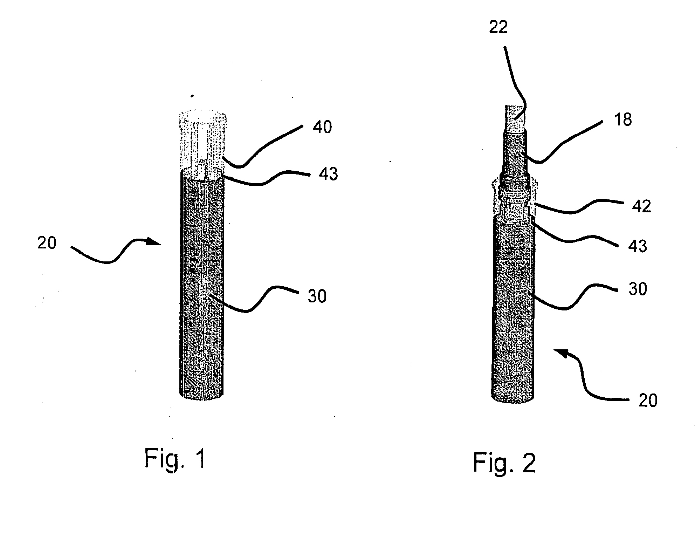

Ein erstes Ausführungsbeispiel eines mit dem erfindungsgemäßen Verfahren hergestellten Gehäuserohlings 20 und ausgehend davon gefertigte Sensoren 10 werden mit Bezug auf die Figuren 1, 3 und 4 beschrieben. Äquivalente Bezugszeichen sind in allen Figuren mit denselben Bezugszeichen versehen.

Fig. 1 zeigt einen mit dem erfindungsgemäßen Verfahren hergestellten Gehäuserohling 20, der als wesentliche Bestandteile eine Innenhülse 30 aus einem ersten Kunststoffmaterial und ein Anschlussstück 40 aus einem von dem ersten Kunststoffmaterial verschiedenen zweiten Kunststoffmaterial aufweist. Das Anschlussstück 40 ist als Stecker aus einem für das menschliche Auge transparenten Material gebildet. Mit grundsätzlich bekannten Verfahren können die Kontaktstifte dieses Steckers mit dem transparenten Kunststoffmaterial umspritzt werden. Das Anschlussstück 40 weist, was aus den Figuren nicht ersichtlich ist, einen konischen Bund auf, mit welchem es in die Innenhülse 30 im Bereich einer Kontaktstelle 43 geringfügig hineinragt. Hierdurch kann vor dem Laserschweißen, welches im Bereich der Kontaktstelle 43 radial umlaufend erfolgt, eine mechanische Vorfixierung bereitgestellt werden. Das Herstellen der Laserschweißnaht im Bereich der Kontaktstelle 43 wird hierdurch vereinfacht.

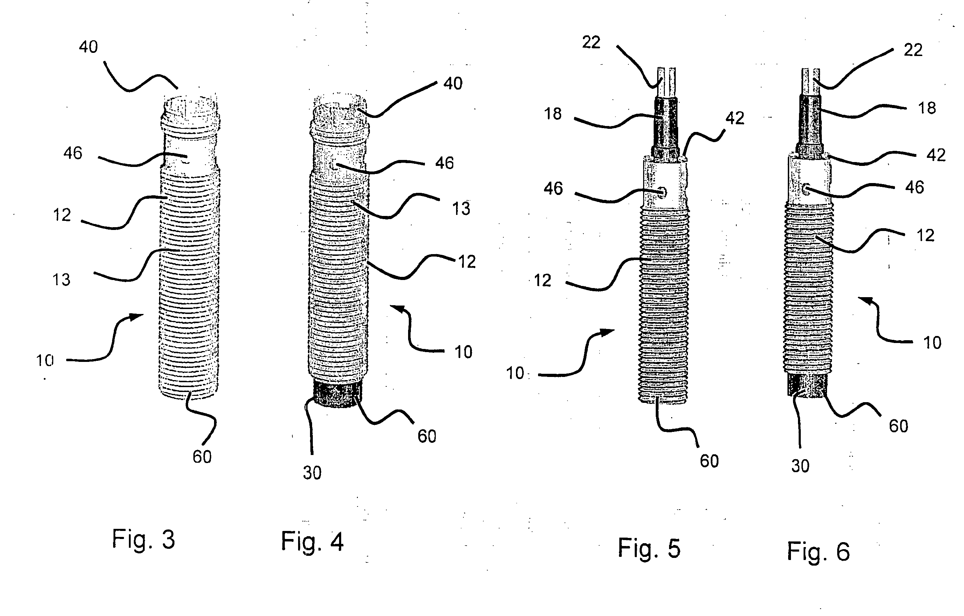

Das in Fig. 3 dargestellte erste Beispiel eines ausgehend von dem in Fig. 1 gezeigten Gehäuserohling 20 gefertigten Sensor 10 beinhaltet den Gehäuserohling 20, von welchem in Fig. 3 nur noch ein Teil des Anschlussstücks 40 sichtbar ist, sowie eine zylindrische Gehäusehülse 12 aus Metall. Die Gehäusehülse 12 ist an ihrer Außenseite mit einem Gewinde 13 versehen, mit dem der fertige Sensor 10 an einem Einsatzort montiert werden kann. Die Gehäusehülse 12 weist eine Öffnung 46 auf, über welche durch das transparente Anschlussstück 40 hindurch optische Signale, insbesondere Schaltzustandsanzeigen des Sensors 10, nach außen gegeben werden können. Der Sensor 10 selbst ist ein induktiver Näherungsschalter, d.h. an einem dem Anschlussstück 40 gegenüberliegenden Messende 60 der Gehäusehülse 12 ist im inneren des Gehäuserohlings 20 eine Spule, die Teil eines Schwingkreises sein kann, als Sensorelement positioniert. Darüber hinaus ist in dem durch den Gehäuserohling 20 umschlossenen fluiddichten Innenraum erfindungsgemäß eine elektronische oder elektromechanische Baugruppe mit den zum Ansteuern und Auslesen des Sensorelements notwendigen Bestandteilen angeordnet.

Fig. 4 zeigt eine Variante des in Fig. 3 gezeigten Beispiels, bei dem die Gehäusehülse 12 etwas kürzer gebildet ist und deshalb ein Endbereich der Innenhülse 30 aus der Gehäusehülse 12 herausragt. Da sich in diesem Fall in der unmittelbaren Umgebung der Induktionsspule, die im Bereich des Messendes 60 der Innenhülse positioniert ist, weniger metallische Bestandteile befinden und der Schwingkreis dadurch weniger stark bedämpft wird, können bei dieser Konfiguration höhere Tastabstände erzielt werden.

Die Innenhülse 30 ist aus einem für das menschliche Auge undurchsichtigen, für die zum Laserschweißen verwendete Strahlung, beispielsweise Infrarotstrahlung, aber durchlässigen Material gebildet. Andererseits absorbiert das transparente Anschlussstück 40 diese Infrarotstrahlung, so dass im Bereich des in die Innenhülse 30 eingesteckten konischen Bunds des Anschlussstücks 40 die Laserschweißverbindung radial umlaufend hergestellt werden kann.

Ein zweites Ausführungsbeispiel eines mit dem erfindungsgemäßen Verfahren gefertigten Gehäuserohlings 20 und auf Grundlage dieses Gehäuserohlings 20 hergestellten Sensoren 10 werden mit Bezugnahme auf die Figuren 2, 5 und 6 erläutert.

Im Hinblick auf den grundlegenden Aufbau des Gehäuserohlings 20 und der daraus gefertigten Sensoren 10 entsprechen diese Varianten weitgehend den im Zusammenhang mit den Figuren 1, 3 und 4 beschriebenen Ausführungsbeispielen.

Der in Fig. 2 gezeigte Gehäuserohling 20 unterscheidet sich von dem Beispiel aus Fig. 1 im Wesentlichen dadurch, dass das Anschlussstück 42 mit einem Kabelabgang gebildet ist. Dabei ist ein Anschlusskabel 22 mit einem tüllenförmigen Biegeschutz 18 in das transparente Anschlussstück 42 integriert. Dies kann in grundsätzlich bekannter Weise dadurch erfolgen, dass das Anschlusskabel 22 zusammen mit dem Biegeschutz mit dem transparenten Kunststoffmaterial umspritzt wird.

Die Figuren 5 und 6 zeigen sodann ausgehend von dem Gehäuserohling 20 aus Fig. 2 hergestellte Sensoren 10. Dabei handelt es sich bei dem Beispiel aus Fig. 5 um eine Variante, bei welcher die Gehäusehülse 12 sich bis zum Messende 60 erstreckt und die Innenhülse 30 vollständig ummantelt, entsprechend dem Beispiel mit Steckerabgang aus Fig. 3. Dem Ausführungsbeispiel aus Fig. 4, bei welchem ein Teil der Innenhülse 30 im Bereich des Messendes 60 nach außen übersteht, entspricht die Variante mit Kabelabgang aus Fig. 6.

Bei dem Außengewinde 13 handelt es sich um ein M12-Gewinde. Auch M18-Gewinde oder andere Gewinde sind in diesem Zusammenhang möglich und gebräuchlich.

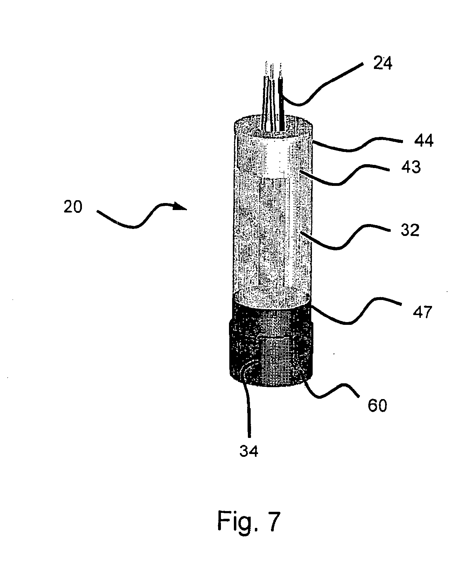

Eine sich von den bisher beschriebenen Ausführungsbeispielen grundsätzlich unterscheidende Variante eines mit dem erfindungsgemäßen Verfahren hergestellten Gehäuserohlings 20 ist in Fig. 7 gezeigt. Hierbei besteht der Gehäuserohling 20 aus insgesamt drei Teilen. Zunächst ist eine Innenhülse 32 vorhanden, welche im Wesentlichen eine röhrenförmige Gestalt aufweist und insbesondere an einem Messende 60 offen ist. Sodann ist an dem Messende 60 des Gehäuserohlings 20 eine Endkappe 34 vorgesehen. An einem dem Messende 60 gegenüberliegenden Ende des Gehäuserohlings 20 ist in die Innenhülse 32 ein Anschlussstück 44 eingesteckt, das von der Innenhülse 32 im Wesentlichen formschlüssig aufgenommen wird. Das Anschlussstück 44 weist eine axiale Öffnung auf, durch welche Anschlusskabel 24 hindurchragen. Das Anschlussstück 44 ist mit der Innenhülse 32 im Bereich der Kontaktstelle 43 durch eine Laserschweißnaht, welche in diesem Fall auch bandförmig sein kann, verbunden. Die Endkappe 34 ist mit der Innenhülse 32 im Bereich einer weiteren Kontaktstelle 47 durch eine wiederum radial umlaufende Laserschweißnaht verbunden.

In allen gezeigten Ausführungsbeispielen werden die Laserschweißnähte von der Gehäusehülse 12, in welche der Gehäuserohling 20 eingeklebt wird, vollständig überlappt. In Kombination mit den bereits sehr guten Eigenschaften der Laserschweißnähte können dadurch im Hinblick auf die Dichtheit des Gehäuses insgesamt besonders gute Eigenschaften erreicht werden.

Mit der hier beschriebenen Erfindung wird ein neuartiges Verfahren zur Herstellung von elektronischen Sensoren bereitgestellt, bei dem durch eine Kombination von Verfahrensschritten, insbesondere der Herstellung von Laserschweißnähten und einem anschließenden Einkleben eines Gehäuserohlings in eine Gehäusehülse, besonders gute Eigenschaften bezüglich der Dichtheit erzielt werden können. Die so hergestellten elektronischen Sensoren sind deshalb für Feuchtapplikationen besonders gut geeignet. Ein wesentlicher Vorteil des erfindungsgemäßen Verfahrens ist außerdem, dass es kostengünstig, zuverlässig und reproduzierbar, insbesondere in industriellen Größenordnungen und Stückzahlen durchgeführt werden kann.

## Patentansprüche

1. Verfahren zur Herstellung eines elektronischen Sensors zum Nachweis einer physikalischen Messgröße,
bei dem ein Sensorelement zum Messen der Messgröße und eine mit dem Sensorelement zu verbindende elektronische Baugruppe in eine Innenhülse (30; 32) eingebaut werden und
bei dem die Innenhülse (30;32) in einer Gehäusehülse (12) montiert wird,
bei dem die Innenhülse (30;32) aus einem ersten Kunststoffmaterial gebildet ist und mit einem Anschlussstück (40,42), welches aus einem zweiten Kunststoffmaterial gebildet ist, zum Herstellen eines Gehäuserohlings (20) durch Laserschweißen an mindestens einer Kontaktstelle (43) fluiddicht verbunden wird, wobei das erste Kunststoffmaterial und das zweite Kunststoffmaterial bei den Wellenlängen der zum Laserschweißen eingesetzten Laserstrahlung unterschiedliche Transmissionseigenschaften aufweisen,
**dadurch gekennzeichnet,**
**dass** der Gehäuserohling (20) in die Gehäusehülse (12) eingeklebt wird und dass die Innenhülse (30;32) und/oder das Anschlussstück (40,42) und/oder eine Endkappe (34) zum reibschlüssigen Fixieren im Bereich der Kontaktstelle (43) und/oder im Bereich einer weiteren Kontaktstelle (47) einen sich verjüngenden Bund aufweisen.

2. Verfahren nach Anspruch 1,
**dadurch gekennzeichnet,**
**dass** die Gehäusehülse (12) den Gehäuserohling (20) an der Kontaktstelle (43) oder gegebenenfalls an den mehreren Kontaktstellen (43;47) vollständig überlappt.

3. Verfahren nach Anspruch 1 oder 2,
**dadurch gekennzeichnet,**
**dass** die Innenhülse (32) an einem Messende (60) offen ist und
**dass** die Innenhülse (32) im Bereich des Messendes (60) mit einer Endkappe (34) durch Laserschweißen an mindestens einer weiteren Kontaktstelle (47) verbunden wird, wobei die Endkappe (34) aus einem dritten Kunststoffmaterial gebildet ist, und
wobei das erste Kunststoffmaterial und das dritte Kunststoffmaterial bei den Wellenlängen der zum Laserschweißen eingesetzten Laserstrahlung unterschiedliche Transmissionseigenschaften aufweisen.

4. Verfahren nach Anspruch 3,
**dadurch gekennzeichnet,**
**dass** in das erste Kunststoffmaterial und/oder in das zweite Kunststoffmaterial und/oder in das dritte Kunststoffmaterial zumindest im Bereich der Kontaktstelle (43) zwischen dem Anschlussstück (40,42) und der Innenhülse (30;32) und/oder im Bereich der weiteren Kontaktstelle (47) zwischen der Innenhülse (30;32) und der Endkappe (34) Pigmente eingebettet sind, mit welchen die gewünschten optischen Eigenschaften des ersten Kunststoffmaterials, des zweiten Kunststoffmaterials und/oder des dritten Kunststoffmaterials bei den zum Laserschweißen eingesetzten Wellenlängen der Laserstrahlung eingestellt werden.

5. Verfahren nach einem der Ansprüche 3 bis 4,
**dadurch gekennzeichnet,**
**dass** das erste Kunststoffmaterial und/oder das zweite Kunststoffmaterial und/oder das dritte Kunststoffmaterial zumindest im Bereich der Kontaktstelle (43) zwischen dem Anschlussstück (40,42) und der Innenhülse (30;32) und/oder im Bereich der weiteren Kontaktstelle (47) zwischen der Innenhülse (30;32) und der Endkappe (34) mit Beschichtungen versehen ist, durch welche die gewünschten optischen Eigenschaften eingestellt werden.

6. Verfahren nach einem der Ansprüche 1 bis 5,
**dadurch gekennzeichnet,**
**dass** die Innenhülse (30;32) und das Anschlussstück (40,42) oder die Innenhülse (30;32) und die Endkappe (34) vor dem Laserschweißen ineinander gesteckt werden.

7. Verfahren nach einem der Ansprüche 1 bis 6,
**dadurch gekennzeichnet,**
**dass** das Anschlussstück (40,42) mit der Innenhülse (30;32) vor dem Laserschweißen im Bereich der Kontaktstelle (43) verrastet wird und/oder dass die Innenhülse (30;32) und die Endkappe (34) vor dem Laserschweißen im Bereich der weiteren Kontaktstelle (47) miteinander verrastet werden.

8. Verfahren nach einem der Ansprüche 1 bis 7,
**dadurch gekennzeichnet,**
**dass** das Anschlussstück (40,42) aus einem für das menschliche Auge transparenten Kunststoffmaterial gebildet ist.

9. Verfahren nach einem der Ansprüche 1 bis 8,
**dadurch gekennzeichnet,**
**dass** durch den Gehäuserohling (20) ein fluiddichter Raum gebildet wird, in welchem die elektronische Baugruppe und das Sensorelement aufgenommen sind.

10. Verfahren nach einem der Ansprüche 1 bis 9,
**dadurch gekennzeichnet,**
**dass** eine Laserschweißnaht zwischen der Innenhülse (30;32) und dem Anschlussstück (40,42) und/oder zwischen der Innenhülse (30;32) und der Endkappe (34) mit einem feststehenden Laser durch gemeinsames Drehen der Innenhülse (30;32), des Anschlussstücks (40,42) beziehungsweise der Endkappe (34) relativ zu einem ortsfesten Laserstrahl hergestellt werden.

11. Verfahren nach einem der Ansprüche 1 bis 10,
**dadurch gekennzeichnet,**
**dass** zwischen der Innenhülse (30;32) und dem Anschlussstück (40,42) und/oder zwischen der Innenhülse (30;32) und der Endkappe (34) eine bandförmige Laserschweißnaht hergestellt wird.

## Claims

1. A method for the fabrication of an electronic sensor for the detection of a physical measurand,
in which a sensor element for measuring said measurand and an electronic subassembly to be connected to said sensor element are fitted into an internal sleeve (30; 32) and
in which said internal sleeve (30; 32) is installed in a sleeve-like casing (12), wherein said internal sleeve (30; 32) is made of a first plastics material and is connected, in a fluid-tight manner, to a connecting piece (40, 42) that is made of a second plastics material for the fabrication of a casing blank (20) by laser welding of an at least one point of contact (43),
wherein said first plastics material and said second plastics material have different transmission properties at the wavelengths of the laser radiation that are used for the laser welding process,
**characterized in that**
said casing blank (20) is adhesively held in position in said sleeve-like housing (12) and
that said internal sleeve (30; 32) and/or said connecting piece (40, 42), and/or an end cap (34) have a tapered collar for the purpose of effecting frictional fixation in the region of said point of contact (43) and/or in the region of a further point of contact (47).

2. The method as defined in claim 1,
**characterized in that**
said sleeve-like housing (12) completely overlaps said casing blank (20) at said point of contact (43) or possibly at a plurality of said points of contact (43; 47).

3. The method as defined in claim 1 or claim 2,
**characterized in that**
said internal sleeve (32) is open at a measuring end (60) and
that said internal sleeve (32) is connected, in the region of said measuring end (60), to an end cap (34) by laser welding at at least one further point of contact (47), wherein said end cap (34) is made of a third plastics material, and wherein said first plastics material and said third plastics material have different transmission properties at the wavelengths of the laser radiation that are used for laser welding.

4. The method as defined in claim 3,
**characterized in that**
pigments are embedded in said first plastics material and/or in said second plastics material, and/or in said third plastics material at least in the region of said point of contact (43) between said connecting piece (40, 42) and said internal sleeve (30; 32), and/or in the region of said further point of contact (47) between said internal sleeve (30; 32) and said end cap (34), by means of which pigments the desired optical properties of said first plastics material, said second plastics material, and/or said third plastics material are adjusted to the wavelengths of the laser radiation that are used for laser welding.

5. The method as defined in any one of claims 3 to 4,
**characterized in that**
coatings are applied to said first plastics material and/or said second plastics material, and/or said third plastics material at least in the region of said point of contact (43) between said connecting piece (40, 42) and said internal sleeve (30; 32), and/or in the region of said further point of contact (47) between said internal sleeve (30; 32) and said end cap (34), by means of which coatings the desired optical properties are adjusted.

6. The method as defined in any one of claims 1 to 5,
**characterized in that**
said internal sleeve (30; 32) and said connecting piece (40, 42), or said internal sleeve (30; 32) and said end cap (34) are fitted together prior to laser welding.

7. The method as defined in any one of claims 1 to 6,
**characterized in that**
said connecting piece (40, 42) is locked to said internal sleeve (30; 32) prior to laser welding in the region of said point of contact (43) and/or that said internal sleeve (30; 32) and said end cap (34) are locked together in the region of said further point of contact (47) prior to laser welding.

8. The method as defined in any one of claims 1 to 7,
**characterized in that**
said connecting piece (40, 42) is made of a plastics material that is transparent to the human eye.

9. The method as defined in any one of claims 1 to 8,
**characterized in that**
said casing blank (20) forms a fluid-tight chamber, in which said electronic subassembly and said sensor element are accommodated.

10. The method as defined in any one of claims 1 to 9,
**characterized in that**
between said internal sleeve (30; 32) and said connecting piece (40, 42) and/or between said internal sleeve (30; 32) and said end cap (34) there is produced, by means of a fixed laser, a laser weld by mutual rotation of said internal sleeve (30; 32), said connecting piece (40, 42), or said end cap (34) relatively to a stationary laser beam.

11. The method as defined in any one of claims 1 to 10,
**characterized in that**
a ribbon-like laser weld is produced between said internal sleeve (30; 32) and said connecting piece (40, 42), and/or between said internal sleeve (30; 32) and said end cap (34).

## Revendications

1. Procédé de fabrication d'un capteur électronique destiné à la détection d'une grandeur de mesure physique,
selon lequel un élément de capteur, destiné à la mesure de la grandeur de mesure, et un composant électronique devant être connecté à l'élément de capteur sont assemblés à l'intérieur d'une gaine intérieure (30; 32), et
selon lequel la gaine intérieure (30; 32) est montée dans un manchon (12), selon lequel la gaine intérieure (30; 32) est réalisée en une première matière plastique et est reliée de manière étanche à un élément de raccordement (40, 42), qui est réalisé en une deuxième matière plastique, pour la constitution d'une ébauche de boîtier (20) au moyen d'un soudage au laser en au moins un point de contact (43),
selon lequel la première matière plastique et la deuxième matière plastique possèdent des propriétés de transmission différentes aux longueurs d'onde du rayonnement laser utilisé pour le soudage au laser,
**caractérisé :**
**en ce que** l'ébauche de boîtier (20) est collée dans le manchon (12), et
**en ce que** la gaine intérieure (30; 32) et/ou l'élément de raccordement (40, 42) et/ou un capuchon d'extrémité (34) comporte un épaulement allant en se rétrécissant, destiné à la fixation par friction dans la région de la position de contact (43) et/ou dans la région d'un point de contact supplémentaire (47).

2. Procédé selon la revendication 1,
**caractérisé :**
**en ce que** le manchon (12) recouvre complètement l'ébauche de boîtier (20) au point de contact (43) ou, éventuellement, aux divers points de contact (43; 47).

3. Procédé selon la revendication 1 ou 2,
**caractérisé :**
**en ce que** la gaine intérieure (32) est ouverte à une extrémité de mesure (60), et
**en ce que** la gaine intérieure (32) est reliée, dans la région de l'extrémité de mesure (60), à un capuchon d'extrémité (34) au moyen d'une soudure laser en au moins un point de contact supplémentaire (47), le capuchon d'extrémité (34) étant réalisé en une troisième matière plastique, et
la première matière plastique et la troisième matière plastique possèdent des propriétés de transmission différentes aux longueurs d'onde du rayonnement laser utilisé pour le soudage au laser.

4. Procédé selon la revendication 3,
**caractérisé :**
**en ce que**, dans la première matière plastique et/ou dans la deuxième matière plastique et/ou dans la troisième matière plastique, au moins dans la région du point de contact (43) entre l'élément de raccordement (40, 42) et la gaine intérieure (30; 32) et/ou dans la région du point de contact supplémentaire (47) entre la gaine intérieure (30; 32) et le capuchon d'extrémité (34), des pigments sont intégrés, avec lesquels les propriétés optiques souhaitées de la première matière plastique, de la deuxième matière plastique et/ou de la troisième matière plastique sont obtenues aux longueurs d'onde du rayonnement laser utilisées pour le soudage au laser.

5. Procédé selon une des revendications 3 et 4,
**caractérisé :**
**en ce que** la première matière plastique et/ou la deuxième matière plastique et/ou la troisième matière plastique est(sont) prévue(s), au moins dans la région du point de contact (43) entre l'élément de raccordement (40, 42) et la gaine intérieure (30; 32) et/ou dans la région du point de contact supplémentaire (47) entre la gaine intérieure (30; 32) et le capuchon d'extrémité (34), avec des revêtements au moyen desquels les propriétés optiques souhaitées sont obtenues.

6. Procédé selon une des revendications 1 à 5,
**caractérisé :**
**en ce que** la gaine intérieure (30; 32) et l'élément de raccordement (40, 42) ou la gaine intérieure (30; 32) et le capuchon d'extrémité (34) sont emboîtés l'un dans l'autre avant le soudage au laser.

7. Procédé selon une des revendications 1 à 6,
**caractérisé :**
**en ce que** l'élément de raccordement (40, 42) est verrouillé avec la gaine intérieure (30; 32) dans la région du point de contact (43) avant le soudage au laser et/ou en ce que la gaine intérieure (30; 32) et le capuchon d'extrémité (34) sont verrouillés l'un avec l'autre dans la région du point de contact supplémentaire (47) avant le soudage au laser.

8. Procédé selon une des revendications 1 à 7,
**caractérisé :**
**en ce que** l'élément de raccordement (40, 42) est réalisé en une matière plastique transparente pour l'oeil humain.

9. Procédé selon une des revendications 1 à 8,
**caractérisé :**
**en ce qu'**un espace étanche est constitué dans l'ébauche de boîtier (20), espace dans lequel le composant électronique et l'élément de capteur sont introduits.

10. Procédé selon une des revendications 1 à 9,
**caractérisé :**
**en ce qu'**une soudure au laser est réalisée, entre la gaine intérieure (30; 32) et l'élément de raccordement (40, 42) et/ou entre la gaine intérieure (30; 32) et le capuchon d'extrémité (34), avec un laser stationnaire au moyen d'une rotation commune de la gaine intérieure (30; 32), de l'élément de raccordement (40, 42) ou respectivement du capuchon d'extrémité (34) par rapport à un faisceau laser fixe.

11. Procédé selon une des revendications 1 à 10,
**caractérisé :**
**en ce que**, entre la gaine intérieure (30; 32) et l'élément de raccordement (40, 42) et/ou entre la gaine intérieure (30; 32) et le capuchon d'extrémité (34), une soudure en forme de bande est réalisée.
